# FASCICULE DE BREVET EUROPEEN

(11) **EP 2 175 307 B1**
(45) Date de publication et mention de la délivrance du brevet: **04.03.2015**
(21) Numéro de dépôt: 09172193.6
(22) Date de dépôt: 05.10.2009
(51) Int. Cl.: G02C 7/02, G02C 7/06

(54) **Verre ophtalmique corrigeant la vision fovéale et la vision périphérique**
Augenglas zur Korrektur des fovealen und peripheren Sehens
Ophthalmic lens correcting foveal vision and peripheral vision

(30) Priorité: 07.10.2008 FR 0856801
(43) Date de publication de la demande: 14.04.2010
(73) Titulaire: ESSILOR INTERNATIONAL (Compagnie Générale d'Optique), 94220 Charenton le Pont (FR)
(72) Inventeur: DROBE, Björn, 94220, CHARENTON-LE-PONT (FR)
(74) Mandataire: Cabinet Plasseraud

(56) Documents cités:
- EP-A- 0 445 994
- EP-A- 1 703 313
- EP-A1- 0 367 878
- WO-A-03/054616
- WO-A-2007/041796
- WO-A-2007/082268
- WO-A-2008/104695
- WO-A1-2008/112037
- DE-A1-102009 053 467
- US-A- 1 955 047
- US-A1- 2007 109 494
- CHENG A C K ET AL: "Assessment of pupil size under different light intensities using the Procyon pupillometer" JOURNAL CATARACT AND REFRACTIVE SURGERY, SURGERY, FAIRFAX, VA, vol. 32, no. 6, 1 juin 2006 (2006-06-01), pages 1015-1017, XP024965774 ISSN: 0886-3350 [extrait le 2006-06-01]
- STEFANIE SCHULDT: "ysis - Natürliches sehen erleben" DEUTSCHE OPTIKER ZEITUNG, XX, DE, no. 5/2004, 1 mai 2004 (2004-05-01), pages 38-43, XP002398937

## Description

La présente invention concerne un procédé de réalisation d'un verre ophtalmique qui corrige la vision fovéale et la vision périphérique.

Elle concerne aussi une lentille ophtalmique qui peut constituer un verre semi-fini à partir duquel un tel verre fini peut être réalisé, ou qui constitue le verre fini lui-même.

La vision fovéale correspond à des conditions d'observation pour lesquelles l'image d'un objet qui est regardé est formée par l'oeil dans la zone centrale de la rétine, appelée zone fovéale.

La vision périphérique correspond à la perception d'éléments d'une scène qui sont décalés latéralement par rapport à l'objet regardé, et dont les images sont formées sur la partie périphérique de la rétine, en dehors de la zone fovéale.

En premier lieu, la correction ophtalmique qui est fournie à un sujet amétrope est adaptée pour sa vision fovéale. Mais, de façon connue, la correction devrait être réduite pour la vision périphérique, par rapport à la correction qui est déterminée pour la vision fovéale. En particulier, des études effectuées sur le singe ont montré qu'une forte défocalisation de la lumière en arrière de la rétine, qui se produit en dehors de la zone fovéale, peut provoquer un allongement de l'oeil, et donc une augmentation du défaut de myopie. Des verres de lunettes ont alors été proposés, par exemple tels que décrits dans le document WO 2007/041796, qui comprennent une zone centrale dédiée à la correction de la vision fovéale, et une zone périphérique dédiée à la vision périphérique. Ainsi, deux valeurs distinctes de correction ophtalmique peuvent être réalisées, qui sont adaptées respectivement pour la vision fovéale et pour la vision périphérique. Mais de tels verres ne fournissent pas une correction appropriée lorsque le porteur regarde un objet en tournant les yeux. En effet, il utilise alors sa vision fovéale à travers une zone latérale du verre qui a été adaptée pour sa vision périphérique.

Le document EP 0 367 878 décrit un verre à zones concentriques qui présente plusieurs valeurs de distance focale en tout point de sa surface. Un tel verre peut fournir simultanément deux valeurs de correction ophtalmique, par exemple pour la vision fovéale et pour la vision périphérique, quelque soit la direction du regard à travers le verre. Mais, parce qu'une partie de la puissance optique est apportée par effet de diffraction lumineuse, le verre présente un chromatisme important. La puissance optique effective du verre ne peut alors pas être accordée précisément pour toutes les couleurs par rapport au défaut de sphère qui est déterminé pour un sujet amétrope.

Le document US 1 955 047 décrit un verre bifocal pour presbyte, dans lequel une correction de la vision de près et une correction de la vision de loin sont réalisées alternativement dans des zones concentriques du verre.

Le document WO 2007/082268 concerne des verres de lunettes qui corrigent à la fois la vision fovéale et la vision périphérique.

Un but de la présente invention consiste donc à fournir un nouveau verre ophtalmique qui procure à un futur porteur des corrections adaptées pour sa vision fovéale et pour sa vision périphérique, sans présenter les inconvénients des verres antérieurs.

Pour cela, l'invention propose un procédé de réalisation d'un verre de lunettes ophtalmiques destiné à un porteur identifié, qui est conforme à la revendication 1.

Ainsi, un verre selon l'invention présente une zone centrale qui produit une correction adaptée à la vision fovéale. La vision fovéale du porteur est donc corrigée de façon optimale lorsque la direction de regard du porteur passe à travers cette zone centrale, notamment à proximité d'un centre de celle-ci.

Le verre possède en plus une zone périphérique dont une partie - les premières régions - est aussi dédiée à la correction de la vision fovéale, comme la zone centrale. Une partie complémentaire de ces premières régions dans la zone périphérique - les secondes régions - est dédiée par ailleurs à la correction de la vision périphérique. Une telle allocation des premières et secondes régions, séparément et respectivement aux corrections des visions fovéale et périphérique ne résulte pas d'un effet diffractif, de sorte que le verre ne présente pas de chromatisme important. Par exemple, les paramètres du verre qui sont déterminés puis appliqués dans les premières et secondes régions peuvent comprendre une courbure moyenne d'une surface du verre et/ou un indice de réfraction lumineuse d'un matériau du verre.

En outre, étant donné que les premières et secondes régions sont alternées avec un pas qui est inférieur à 2 mm (millimètre), les deux corrections sont disponibles simultanément dans la zone périphérique. En effet, le pas d'alternance des premières et secondes régions est alors inférieur au diamètre de la pupille du porteur. Ainsi, lorsque la direction du regard du porteur traverse la zone périphérique du verre, la première correction intervient pour des premiers rayons lumineux qui traversent le verre dans une première région et qui participent à la formation d'une partie centrale de l'image sur la pupille du porteur, dans la zone fovéale. En même temps, la seconde correction intervient pour des seconds rayons lumineux qui traversent le verre dans une seconde région et qui participent à la formation d'une partie périphérique de la même image sur la pupille du porteur, en dehors de la zone fovéale. Le porteur perçoit donc une image nette même lorsqu'il regarde obliquement à travers le verre.

La zone périphérique du verre peut entourer la zone centrale, ou bien ne s'étendre que sur un ou plusieurs côtés de celle-ci.

Par ailleurs, le pas d'alternance des premières et secondes régions dans la zone périphérique peut être constant ou variable.

De préférence, la zone centrale, les premières et les secondes régions sont déterminées par des variations d'au moins un paramètre d'une même première surface du verre ophtalmique. Une seconde surface du verre peut alors être modifiée en reprise pour adapter le verre à la première correction ophtalmique du porteur. De cette façon, des verres semi-finis identiques qui déterminent la zone centrale et les premières et secondes régions peuvent être utilisés pour des porteurs ayant des premières corrections ophtalmiques qui sont différentes. Les variations paramétriques entre la zone centrale et les premières régions d'une part, et les secondes régions d'autre part, peuvent former des discontinuités de la surface elle-même. Un gain en épaisseur et un allègement du verre peuvent en résulter. Cette première surface peut être la face antérieure convexe du verre, ou sa face postérieure concave. Ce peut être aussi une surface intermédiaire entre les faces antérieure et postérieure du verre, qui sépare deux milieux transparents ayant des valeurs différentes d'un indice de réfraction lumineuse.

Selon un premier perfectionnement de l'invention, l'étape /2/ peut comprendre les sous-étapes suivantes :
/2-1/ caractériser une amplitude d'un mouvement de tête du porteur, qu'il effectue en regardant successivement des objets qui sont situés dans des directions différentes ; et
/2-2/ déterminer une taille de la zone centrale du verre de sorte que cette taille de zone centrale décroisse en fonction de l'amplitude du mouvement de tête qui a été caractérisée pour le porteur.

De cette façon, les secondes régions du verre, dans lesquelles la correction ophtalmique est adaptée pour la vision périphérique du porteur, peuvent être agencées plus près du centre du verre pour un porteur qui tourne principalement la tête en changeant de direction de regard. A l'inverse, la zone centrale peut être plus grande pour un porteur qui tourne plutôt les yeux que la tête. La vision périphérique peut ainsi être corrigée d'une façon appropriée pour des valeurs d'excentricité qui sont faibles, sans gêner le porteur par rapport à sa propension à tourner plutôt la tête ou les yeux pour regarder dans des directions différentes.

De préférence, la zone centrale du verre, dans laquelle les paramètres correspondent à la première correction ophtalmique, peut être contenue dans un disque de rayon 7,5 mm. Ainsi, la vision périphérique du porteur peut être corrigée de façon appropriée pour des valeurs d'excentricité à partir de et supérieures à environ 30° (degré).

Selon un second perfectionnement de l'invention, une proportion entre les premières et les secondes régions dans la zone périphérique peut être déterminée à l'étape /3/ en fonction de l'amplitude du mouvement de tête qui est effectué par le porteur, lorsqu'il regarde successivement des objets situés dans des directions différentes. Elle est déterminée de sorte qu'un quotient d'une somme de surfaces de secondes régions par une surface d'une partie correspondante de la zone périphérique, croisse en fonction de l'amplitude du mouvement de tête effectué par le porteur.

Pour mettre en oeuvre ces perfectionnements, l'amplitude du mouvement de tête qui est effectué par le porteur peut être caractérisée en exécutant les sous-étapes suivantes :
- mesurer un angle de rotation de la tête du porteur, lorsqu'il regarde successivement deux objets qui sont situés dans des directions séparées angulairement ; et
- déterminer une valeur d'un gain à partir d'un quotient entre l'angle qui a été mesuré pour la rotation de la tête du porteur d'une part, et une distance angulaire entre les deux objets d'autre part, ce gain variant comme une fonction croissante ou comme une fonction décroissante du quotient.

De façon générale, un verre ophtalmique selon l'invention est adapté pour produire une correction de myopie ou une correction d'hypermétropie pour le porteur.

D'autres particularités et avantages de la présente invention apparaîtront dans la description ci-après d'exemples de mise en oeuvre non limitatifs, en référence aux dessins annexés, dans lesquels :
- les figures 1a et 1b sont deux vues d'une première lentille, respectivement en coupe et en plan, qui illustrent un principe pouvant être repris dans des mises en oeuvre de l'invention ;
- les figures 2a et 2b correspondent respectivement aux figures 1 a et 1b, pour une seconde lentille ;
- la figure 3 est un diagramme représentant des variations de correction de la vision périphérique, pour un verre selon l'invention ;
- les figures 4a et 4b illustrent un principe de mesure de mouvements d'yeux et de tête pour un porteur de lunettes ;
- la figure 5 est un diagramme représentant des variations d'une taille de zone centrale pour un verre selon l'invention ;
- la figure 6 est un diagramme représentant des variations d'une proportion moyenne de régions dédiées à la correction de la vision périphérique ;
- la figure 7 est un diagramme représentant des variations d'une proportion locale de régions dédiées à la correction de la vision périphérique, pour une série de verres selon l'invention ;
- la figure 8 correspond à la figure 7 pour un exemple particulier de verre selon l'invention ;
- la figure 9 est un diagramme représentant des variations de puissance optique dans la zone périphérique, pour un autre exemple particulier de verre selon l'invention ; et
- les figures 10a et 10b sont deux vues d'un verre progressif tel que résultant de l'invention, respectivement en coupe et en plan.

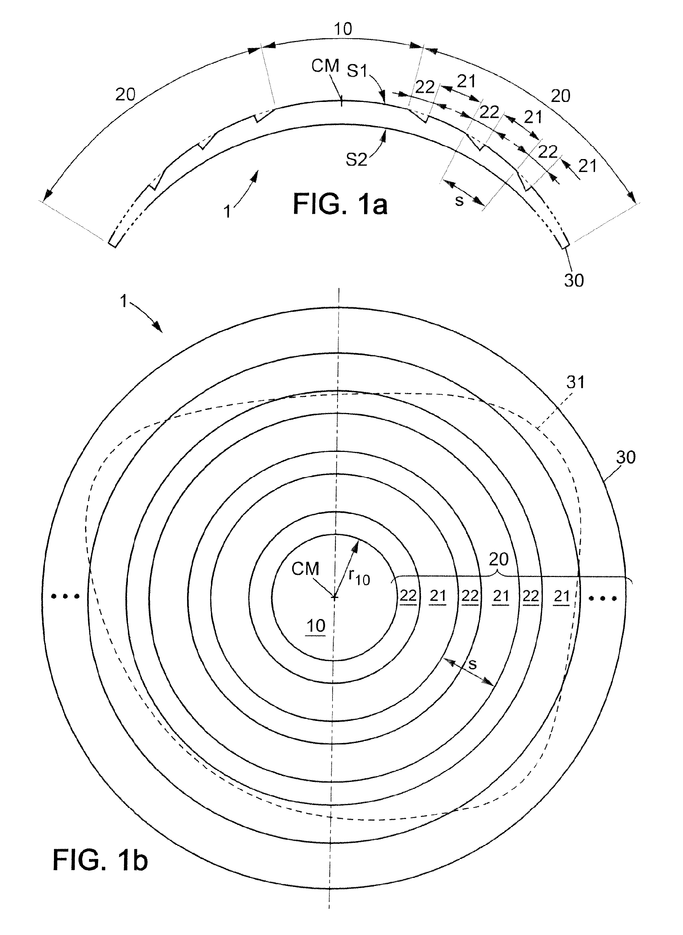

Pour raison de clarté, les dimensions qui apparaissent sur les figures 1a, 1b, 2a, 2b, 10a et 10b ne correspondent pas à des dimensions réelles ni à des rapports de dimensions réels. En outre, des références identiques qui sont indiquées sur des figures différentes ont des significations identiques.

Conformément aux figures 1 a et 1b, une lentille ophtalmique 1 comprend une face antérieure S1 et une face postérieure S2. Les faces antérieure S1 et postérieure S2 sont désignées ainsi par rapport à la position d'utilisation de la lentille 1 par un porteur de celle-ci. La lentille 1 peut former un verre semi-fini ou fini. Par verre semi-fini, on entend une ébauche de verre de lunettes, dont une seule des faces antérieure ou postérieure possède une forme définitive. L'autre face est alors usinée ultérieurement, notamment pour conférer au verre fini des valeurs de puissance optique qui correspondent à l'amétropie qui a été déterminée pour le futur porteur du verre. Lorsque la lentille 1 est un verre semi-fini, elle possède un bord périphérique initial 30 qui peut être circulaire avec un diamètre de 60 mm, par exemple. Lorsqu'il s'agit d'un verre fini, avec ses deux faces S1 et S2 qui sont définitives, son bord périphérique peut être encore celui du verre semi-fini. Ce bord peut aussi avoir été détouré aux dimensions d'un logement de monture de lunettes ophtalmiques, dans lequel le verre est destiné à être assemblé. Le contour 31 sur la figure 1b représente le bord d'un tel verre fini après détourage.

La lentille 1 est divisée en plusieurs zones parallèlement à l'une des faces S1 ou S2. Parmi ces zones, une zone centrale 10 peut être centrée par rapport à une croix de montage CM de la lentille 1, par exemple. Cette croix CM est utilisée pour placer la lentille 1 par rapport au logement de monture de lunettes. Une zone périphérique 20 s'étend entre la zone centrale 10 et le bord périphérique 30 ou 31 de la lentille 1. Pour l'invention, la zone 20 s'étend dans un secteur angulaire qui est limité au dessus et de chaque côté de la zone 10.

La zone centrale 10 est de préférence contenue dans un disque de rayon 7,5 mm. De cette façon, la zone périphérique 20 présente une surface qui est suffisante pour mettre en oeuvre l'invention, même lorsque le logement du verre dans la monture est petit.

De préférence aussi, la zone centrale 10 peut contenir un disque de rayon 2 mm. La zone 10 est alors traversée par une proportion significative des rayons lumineux qui forment une image dans la zone fovéale de la rétine du porteur, lorsque la direction du regard de celui-ci passe par ou à proximité du centre de la zone 10.

La zone périphérique 20 est divisée en premières et secondes régions contiguës qui sont référencées respectivement 21 et 22. Les régions 21 et 22 sont alternées et dédiées respectivement à l'obtention de deux corrections ophtalmiques pour le porteur du verre fini qui est réalisé à partir de la lentille 1. Ainsi, les régions 21 sont dédiées à la l'obtention d'une première correction d'amétropie, et les régions 22 sont dédiées à l'obtention d'une seconde correction d'amétropie qui est différente de la première correction. En outre, la première correction d'amétropie des régions 21 est identique à celle qui est réalisée dans la zone centrale 10.

Selon l'invention, la première correction ophtalmique est déterminée pour corriger la vision fovéale du porteur du verre fini qui est réalisé à partir de la lentille 1, et la seconde correction ophtalmique est déterminée pour corriger la vision périphérique de ce porteur, pour au moins une direction de rayons lumineux traversant sa pupille obliquement par rapport à la direction de son regard. Ces deux corrections ophtalmiques sont différentes l'une de l'autre.

La première correction ophtalmique, pour la vision fovéale, peut être déterminée pour le porteur d'une des façons usuelles. D'une façon qui est aussi connue, une correction d'amétropie qui est adaptée à sa vision périphérique peut être déterminée en effectuant une mesure sur le porteur. Une telle mesure peut être, en particulier, une mesure d'autoréfraction ou de skiascopie réalisée en dehors de l'axe optique de l'oeil.

Eventuellement, lorsque la zone centrale 10 et les premières régions 21 du verre produisent une première correction de myopie pour la vision fovéale du porteur, la seconde correction peut correspondre à une sous-correction de myopie pour sa vision périphérique. Une telle sous-correction peut éviter que le degré de myopie du porteur du verre n'augmente à long terme, tout en conservant une correction de la vision fovéale qui lui procure une acuité maximale. De même, lorsque la première correction est une correction d'hypermétropie pour la vision fovéale, la seconde correction peut correspondre à une sous-correction d'hypermétropie pour la vision périphérique.

Alternativement, la correction d'amétropie pour la vision périphérique du porteur et pour une excentricité fixée peut être déterminée en ajoutant une valeur constante à la valeur de correction d'amétropie qui est déterminée pour la vision fovéale de ce porteur. Pour une correction de myopie, cette valeur constante peut être + 0,8 dioptrie pour une excentricité de 30°, ce qui correspond à un écart moyen entre le degré de myopie d'une personne en vision fovéale et son degré de myopie pour la vision périphérique. Dans la présente invention, l'excentricité désigne un angle entre la direction d'un rayon lumineux oblique qui entre dans l'oeil du porteur et la direction de son regard à travers le verre. En considérant pour la correction de la vision périphérique que la direction du regard reste confondue avec une direction de référence qui passe par un point fixe du verre, l'excentricité du rayon lumineux peut être repérée par la distance sur le verre entre le point de traversée du rayon et le point fixe. Ce point fixe peut être la croix de montage CM qui est imprimée sur le verre, et qui correspond en général à la direction de regard droit devant pour le porteur. Par suite, l'excentricité de la direction du rayon lumineux peut être repérée par la distance radiale sur le verre entre la croix de montage CM et le point de traversée de la face antérieure S1 du verre par cette direction de regard. Elle est notée E dans la suite.

Un verre selon l'invention est réalisé dans les premières régions 21 et la zone centrale 10 conformément à un premier ensemble de paramètres qui correspond à la première correction d'amétropie, et dans les secondes régions 22 conformément à un second ensemble de paramètres qui correspond à la seconde correction d'amétropie. Par exemple, les premiers et seconds paramètres peuvent être des courbures d'une face de la lentille 1, par exemple la face S1, dans les régions ou zones correspondantes. Dans ce cas, la face S1 présente des discontinuités de courbure entre deux régions 21 et 22 qui sont contiguës, ainsi qu'entre la zone centrale 10 et celles des régions 22 qui lui est contiguë. Eventuellement, ces discontinuités de courbure peuvent être superposées à des discontinuités de hauteur sagittale, perpendiculairement à la face S1 (figure 1a).

Le verre fini possède donc une première puissance optique qui est la même dans la zone centrale 10 et dans les premières régions 21, et une seconde puissance optique dans chacune des secondes régions 22. La première puissance optique, dans la zone 10 et les régions 21, est notée P₁. Etant donné qu'elle concerne la vision fovéale, la puissance optique P₁ est déterminée pour des rayons lumineux qui proviennent de l'objet regardé et qui passent par le centre de rotation de l'oeil du porteur après avoir traversé le verre de lunettes.

La seconde puissance optique du verre fini dans les secondes régions 22 est notée P₂. Etant donné qu'elle concerne la vision périphérique, la puissance optique P₂ est dédiée à des rayons lumineux qui sont différents de ceux qui sont concernés par la puissance optique P₁. Pour cette raison, la puissance optique P₂ est déterminée à partir de rayons lumineux qui proviennent de l'objet regardé et qui passent par la pupille du porteur après avoir traversé le verre de lunettes. Plus exactement, un rayon lumineux qui participe à la vision périphérique passe par les points nodaux de l'oeil du porteur, en étant oblique par rapport à l'axe de l'oeil.

La puissance optique P₂, à l'intérieur de l'une quelconque des régions 22, peut être du même signe, positive pour une correction d'hypermétropie ou négative pour une correction de myopie, ou non que la puissance optique P₁ dans la zone 10 et dans les régions 21.

Lorsque la première correction ophtalmique qui est produite par le verre dans la zone centrale 10 et les premières régions 21 est une correction d'hypermétropie, la puissance optique P₂ à l'intérieur de l'une quelconque des secondes régions 22 est de préférence inférieure en valeur algébrique à la puissance optique P₁. La puissance optique P₂ peut en outre être constante ou décroître en valeur algébrique en fonction de la distance radiale qui est mesurée sur le verre à partir d'un point de référence de la zone 10.

A l'inverse, lorsque la première correction ophtalmique est une correction de myopie, la puissance optique P₂ à l'intérieur de l'une quelconque des secondes régions 22 est de préférence supérieure en valeur algébrique à la puissance optique P₁. La puissance optique P₂ peut en outre être constante ou croître en valeur algébrique en fonction de la distance radiale.

De telles variations nulles ou monotones de la puissance optique P₂ interviennent d'une région 22 à une autre, et éventuellement à l'intérieur de chaque région 22. De cette façon, plusieurs corrections de la vision périphérique peuvent être obtenues, qui sont chacune adaptées pour une valeur différente de l'excentricité E.

Selon une première possibilité, la valeur de la puissance optique P₂ à l'intérieur des secondes régions 22 peut être la même dans toute la zone périphérique 20.

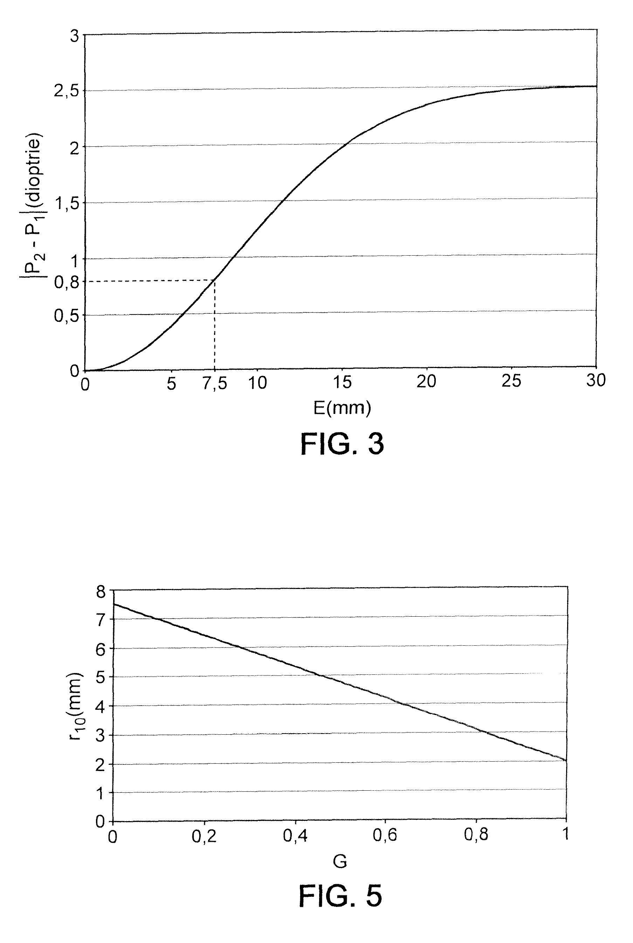

Selon une seconde possibilité, l'écart absolu |P₂ - P₁| entre la valeur de la puissance optique P₂ dans les régions 22 d'une part, et la valeur commune de la puissance optique P₁ dans la zone 10 et les régions 21 d'autre part, peut croître progressivement en fonction de l'excentricité E. Le diagramme de la figure 3 montre une telle variation, avec la valeur de 0,8 dioptrie pour 7,5 mm d'excentricité, correspondant à une incidence de 30° pour des rayons lumineux qui participent à la vision périphérique. Ce diagramme indique des valeurs de l'écart |P₂ - P₁| pour toutes les valeurs de l'excentricité E, de façon à pouvoir être utilisé quelques soient les positions et les largeurs des régions 22. Mais il est entendu que pour une lentille selon l'invention, seuls des segments disjoints de la courbe de la figure 3, et distants de l'origine, correspondent aux régions 22.

Selon une troisième possibilité encore, la puissance optique P₂ peut être constante à l'intérieur de chaque région 22, alors que l'écart absolu |P₂ - P₁| augmente entre deux régions 22 successives en direction du bord périphérique 30 ou 31.

Avantageusement, les secondes régions 22 ont chacune au moins une dimension qui est comprise entre 15 µm (micromètre) et 1000 µm, de préférence entre 25 µm et 50 µm. Ainsi, la partition de la zone périphérique 20 entre les régions 21 et 22 ne provoque aucune diffraction significative, tout en restant invisible ou presqu'invisible à l'oeil nu. Aucune gêne n'en résulte donc pour le porteur, et le verre conserve une qualité esthétique qui est compatible avec les exigences du domaine ophtalmique.

Le pas d'alternance des régions 21 et 22 est la distance de décalage entre deux régions 21 qui sont séparées par une région 22 unique. Il est noté s sur les figures. Ce pas possède des valeurs locales dans la zone périphérique 20. Il peut être constant ou varier à l'intérieur de la zone 20, tout en restant inférieur à 2 mm. Par ailleurs, selon une disposition préférée des régions 21 et 22 dans la zone périphérique 20, les régions 21 et 22 peuvent être des bandes qui sont disposées dans le secteur angulaire de la zone 20 autour de la zone 10. Ces bandes de régions 21 et 22 peuvent être alternées le long de directions radiales partant de la zone 10 vers le bord périphérique 30 ou 31. Dans ce cas, la largeur de chaque bande de région 22 peut être comprise entre 15 µm et 1000 µm, de préférence entre 25 µm et 50 µm, le long des directions radiales issues de la croix de montage CM.

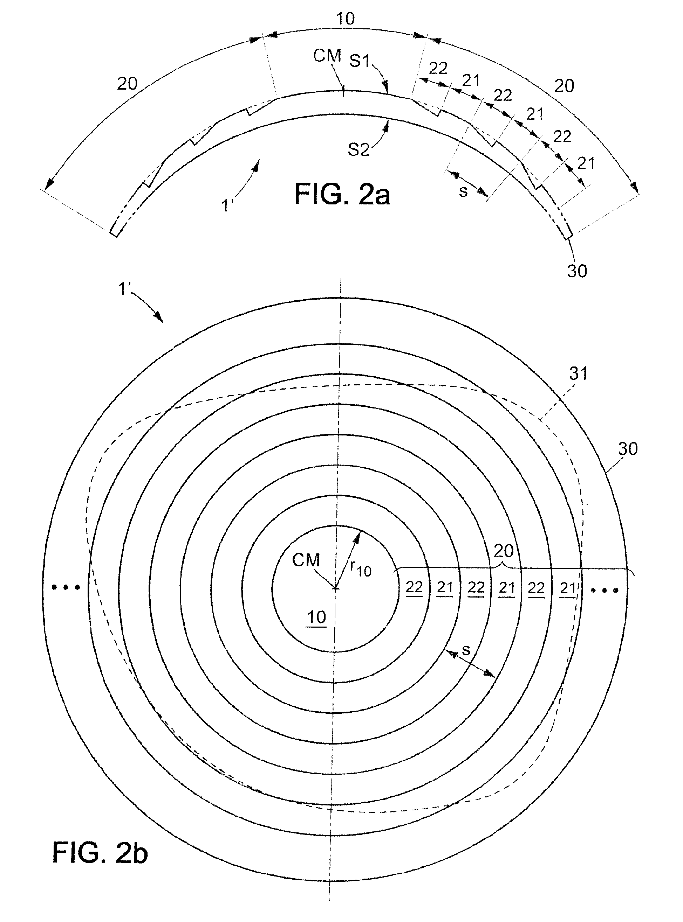

La lentille des figures 2a et 2b est référencée globalement 1'. Les lentilles 1 et 1' présentent des zones centrales respectives 10 qui ont des dimensions identiques. Elles sont circulaires et centrées sur la croix de montage CM, avec le même rayon r₁₀. Simultanément, le pas d'alternance s des régions 21 et 22 est identique pour les lentilles 1 et 1'. Les lentilles 1 et 1' sont différenciées par les valeurs d'un rapport cyclique des régions 21 et 22. Dans la présente description, on entend par rapport cyclique des régions 21 et 22 le quotient de la dimension des régions 22 selon la direction d'alternance avec les régions 21, par la valeur locale du pas d'alternance s. Ce rapport cyclique peut être constant ou varier dans la zone périphérique 20.

Selon deux perfectionnements de l'invention, la taille de la zone centrale 10 d'une part, et la proportion entre les régions 21 et les régions 22 d'autre part, peuvent être adaptées au porteur du verre en fonction de sa propension à tourner plus les yeux ou la tête lorsqu'il regarde successivement des objets qui sont dans deux directions différentes. Il est entendu que la taille de la zone 10 et la proportion entre les régions 21 et 22 peuvent être ainsi adaptées indépendamment l'une de l'autre. En particulier, la taille de la zone 10 seulement peut être adaptée de cette façon au porteur, ou bien la proportion entre les régions 21 et 22 seulement.

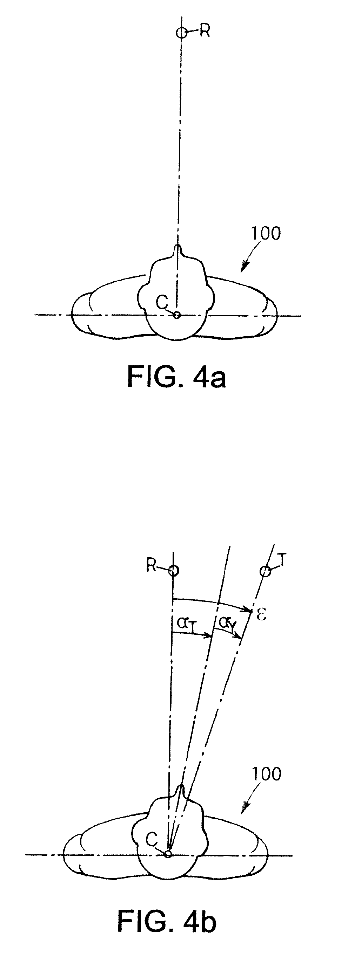

Dans ce but, on caractérise d'abord des amplitudes relatives de mouvements d'yeux et de tête qui sont effectués par le porteur auquel le verre est destiné. Pour cela, on peut demander au porteur de regarder droit devant lui une première cible, dite cible de référence, en se plaçant face à celle-ci. La cible de référence est notée R sur la figure 4a, et la référence 100 désigne le porteur. Elle peut être située à hauteur d'yeux pour le porteur, en particulier. Le porteur se place donc devant la cible de référence R, avec les épaules sensiblement situées dans un plan vertical qui est perpendiculaire à la ligne virtuelle qui relie sa tête à la cible de référence. Il a alors la tête et les yeux qui sont orientés en direction de la cible de référence.

A partir de cette situation, on demande au porteur 100 de regarder une seconde cible, dite cible de test et notée T, qui est décalée par rapport à la cible de référence R, sans bouger les épaules. Pour ce faire, il tourne pour partie la tête et pour partie les yeux (figure 4b), de sorte que la direction de son regard passe de la cible de référence R à la cible de test T. De préférence, la cible de test T est décalée horizontalement par rapport à la cible de référence R, de façon à caractériser les mouvements horizontaux de tête et d'yeux du porteur.

La distance angulaire entre la cible de test T et celle de référence R, par rapport au porteur 100, est notée ε. On prend le centre C de rotation de la tête comme pôle de mesure des angles dans un plan horizontal qui contient ce pôle et les deux cibles R et T. Sur la figure 4b, α_{T} désigne l'angle de rotation de la tête du porteur 100, aussi appelé déviation angulaire de la tête, pour passer de la première situation d'observation de la cible de référence R à la seconde situation d'observation de la cible de test T. α_{Y} est l'angle de la rotation des yeux qui est effectuée simultanément par le porteur 100. La distance angulaire ε est donc égale à la somme des deux angles α_{T} et α_{Y}.

On calcule alors le quotient de la déviation angulaire de la tête α_{T} par la distance angulaire ε. Ce quotient est égal à l'unité pour un porteur qui a exclusivement tourné la tête pour passer de la cible de référence R à la cible de test T, et à zéro pour un porteur qui a tourné seulement les yeux.

On calcule ensuite un gain G pour ce test de coordination de mouvement "oeil/tête" qui a été effectué pour le porteur 100. Le gain G peut être défini par une fonction prédéterminée du quotient de la déviation angulaire de la tête α_{T} par la distance angulaire ε. Par exemple, le gain G peut être directement égal au quotient de α_{T} par ε : G = α_{T} / ε. Un porteur qui tourne essentiellement les yeux pour fixer la cible de test («eye-mover») a donc une valeur du gain G proche de zéro, et un porteur qui tourne essentiellement la tête pour fixer la même cible («head-mover») a une valeur de G proche de l'unité.

Ce test de coordination de mouvement "oeil/tête" peut être effectué par le porteur dans la boutique d'un détaillant opticien chez qui il commande sa paire de lunettes équipée du verre conforme à l'invention. D'autres tests de coordination de mouvement "oeil/tête" qui sont équivalents à celui qui vient d'être décrit peuvent être effectués alternativement, sans que la mise en oeuvre de l'invention soit modifiée dans son principe.

Le diagramme de la figure 5 est un exemple de variation de la taille de la zone centrale 10 en fonction du gain G. A titre d'exemple, la zone 10 possède encore une forme de disque. Le rayon de ce disque est noté r₁₀ et est reporté en ordonnée. Les valeurs possibles du gain G sont indiquées en abscisse. La variation du rayon r₁₀ peut être linéaire, entre une valeur minimale de 2 mm qui est attribuée lorsque le gain G est égal à l'unité, et une valeur maximale de 7,5 mm qui est attribuée lorsque le gain G est égal à zéro. Ainsi, une taille peut être attribuée à la zone centrale 10, qui est d'autant plus réduite que le porteur bouge plus la tête lorsqu'il regarde successivement dans deux directions différentes.

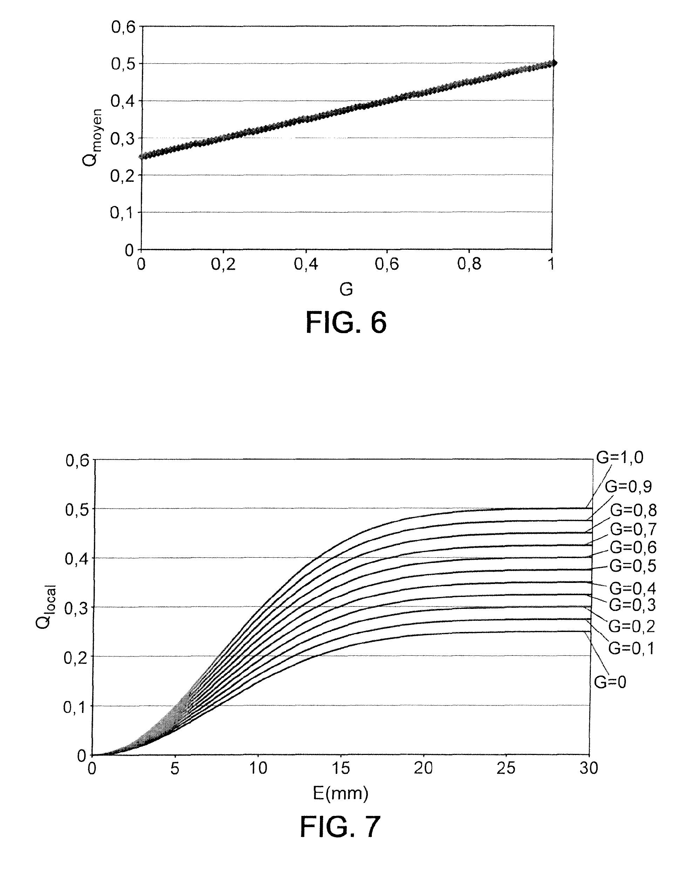

Le diagramme de la figure 6 est un exemple de variation de la proportion globale des secondes régions 22 dans la zone périphérique 20. Cette proportion globale est définie comme le quotient de la somme des surfaces des régions 22 par une surface totale de la zone périphérique 20. Elle est notée Q_{moyen} et reportée en ordonnée. Les valeurs du gain G sont encore indiquées en abscisse. La variation de la proportion Q_{moyen} peut être linéaire, entre une valeur minimale de 0,25 qui est attribuée lorsque le gain G est égal à zéro, et une valeur maximale de 0,5 qui est attribuée lorsque le gain G est égal à l'unité. Ainsi, une valeur peut être attribuée à la proportion globale Q_{moyen} des régions 22, qui est d'autant plus élevée que le porteur bouge plus la tête lorsqu'il regarde successivement dans deux directions qui sont différentes.

Plusieurs méthodes peuvent être utilisées pour réaliser une valeur quelconque de la proportion globale Q_{moyen} des régions 22 dans la zone périphérique 20.

Selon une première méthode, les bandes des régions 22 peuvent avoir des largeurs respectives qui sont fixées initialement dans toute la zone périphérique 20, selon les directions radiales issues de la croix de montage CM. Dans ce cas, la proportion entre les régions 21 et 22 peut être déterminée en sélectionnant une valeur du pas d'alternance s. Autrement dit, les bandes de régions 22 peuvent être plus ou moins écartées ou resserrées à l'intérieur de la zone 20. La valeur du pas s est alors déterminée par les largeurs des bandes de régions 21. En particulier, les bandes des régions 22 peuvent toutes avoir des largeurs identiques selon les directions radiales.

Selon une seconde méthode, les bandes des régions 21 et 22 peuvent être réparties avec un pas d'alternance s qui est fixé initialement selon les directions radiales dans la zone périphérique 20. La proportion entre les régions 21 et 22 peut alors être déterminée en sélectionnant une valeur du rapport cyclique des bandes des régions 21 et 22 dans la zone 20. En particulier, le pas d'alternance s peut être constant dans la zone périphérique 20. La lentille des figures 1 a et 1b d'une part, et la lentille 1' des figures 2a et 2b d'autre part, se distinguent l'une de l'autre par un tel ajustement de la proportion des régions 22 dans la zone périphérique 20. La lentille 1 (figure 1 a et 1b) correspond à la valeur nulle du gain G, et la lentille 1' (figure 2a et 2b) correspond à la valeur unitaire du gain G.

La proportion des régions 22 à l'intérieur de la zone périphérique 20 peut aussi être ajustée localement et varier entre des points différents de la zone 20. Une telle valeur locale de la proportion est notée Q_{local}. Elle est déterminée à partir d'une portion de la zone 20 qui est réduite autour d'un point considéré, tout en contenant quelques portions de régions 21 et quelques portions de régions 22. La proportion locale Q_{local} peut être déterminée des mêmes façons que la proportion globale Q_{moyen}, en considérant des valeurs locales pour le pas d'alternance s et pour le rapport cyclique des régions 21 et 22.

Dans ce cas, la proportion locale Q_{local} des régions 22 dans la zone périphérique 20 est de préférence une fonction croissante de l'excentricité E d'un rayon lumineux sur le verre. Autrement dit, les secondes régions 22 occupent une proportion croissante de la zone périphérique 20, pour des distances radiales sur le verre à partir du centre de la zone 10 qui sont de plus en plus grandes.

Le diagramme de la figure 7 représente de telles variations de la proportion locale Q_{local} des régions 22 dans la zone 20, pour plusieurs valeurs possibles du gain G. Les valeurs de la proportion locale Q_{local} sont repérées en ordonnée, et les valeurs de l'excentricité E d'un rayon lumineux sont repérées en abscisse. Pour une valeur fixée de l'excentricité E, la proportion locale Q_{local} est en outre une fonction croissante de la valeur du gain G, d'une façon qui est cohérente avec des variations de la proportion globale Q_{average} telles que montrées sur la figure 6.

Un verre fini qui est conforme à l'invention peut être réalisé à partir d'un verre semi-fini dont l'une parmi la face antérieure S1 et la face postérieure S2 détermine la zone centrale 10 et la zone périphérique 20 divisée en régions 21 et 22 comme il vient d'être décrit. Lorsque l'autre face est usinée selon une forme sphérique ou torique, le verre semi-fini fixe l'écart entre les corrections ophtalmiques qui seront produites par le verre fini, respectivement dans la zone centrale 10 et les régions 21 d'une part, et dans l'une au moins des régions 22 d'autre part. Dans ce cas, la réalisation du verre peut comprendre les sous-étapes suivantes :
- sélectionner le verre semi-fini, et
- usiner l'autre de la face antérieure S1 et de la face postérieure S2 du verre semi-fini, de sorte que le verre fini produise la première correction ophtalmique dans la zone 10 et dans les régions 21.

Comme indiqué plus haut, le verre semi-fini peut être sélectionné en fonction de la taille de la zone centrale 10 ou/et de la proportion entre les régions 21 et 22 déterminée pour le porteur. Sa face définitive peut être la face antérieure S1, notamment.

Le tableau 1 ci-dessous regroupe des caractéristiques de trois verres finis conformes à l'invention (δ désigne l'unité de dioptrie):

**Tableau 1**

| | Verre 1 | Verre 2 | Verre 3 |
|---|---|---|---|
| Rayon r₁₀ de la zone 10 | 2,0 mm | 7,5 mm | 4,75 mm |
| Valeur maximale de Q_{local} | 0,50 | 0,25 | 0,375 |
| Variation de Q_{local} avec E | constante | croissante | constante |
| Puissance optique P₁ | - 4,00 δ | - 2,00 δ | - 6,00 δ |
| Puissance optique P₂ | - 3,20 δ | - 0,50 δ | variable |
| Ecart \|P₂ - P₁\| | 0,80 δ | 1,50 δ | variable |
| Largeur radiale des régions 22 | 50 µm | 25 µm | 25 µm |
| Valeur correspondante de G | 1 | 0 | 0,5 |

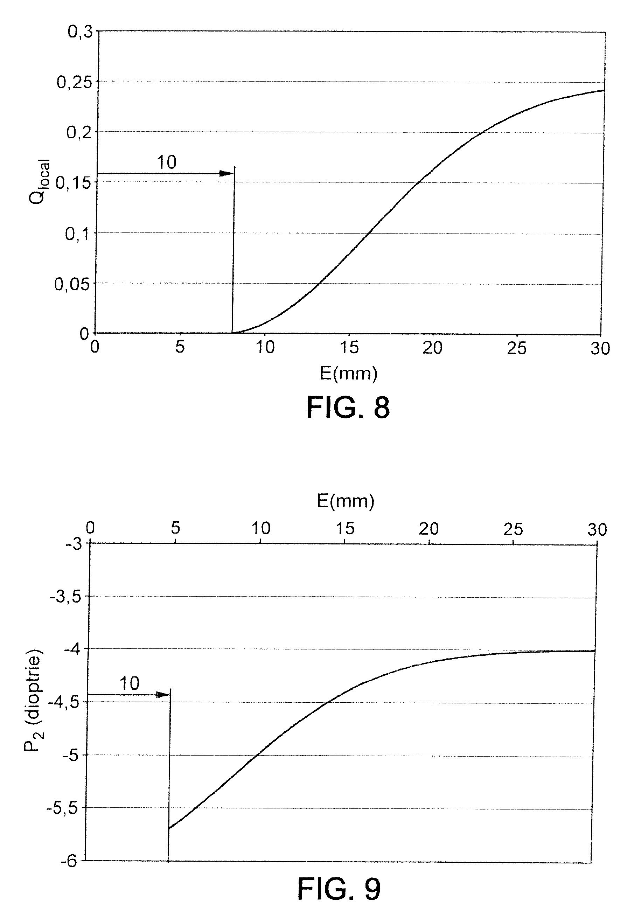

Les figures 8 et 9 complètent le tableau 1 pour les caractéristiques des verres 2 et 3 qui ne sont pas constantes :
- le diagramme de la figure 8 montre les variations de la proportion locale Q_{local} des régions 22 dans la zone périphérique 20 du verre 2, en fonction de l'excentricité E ; et
- le diagramme de la figure 9 montre les variations de la puissance optique P₂ dans les régions 22 du verre 3.

Ces deux diagrammes font apparaître la zone centrale 10 mais, à cause des petites dimensions radiales des régions 22, celles-ci n'apparaissent pas dans les parties de ces courbes qui correspondent à la zone périphérique 20.

De façon générale lorsque les régions 21 et 22 sont situées sur la face antérieure convexe S1 de la lentille, et lorsque le verre de lunettes qui est réalisé à partir celle-ci produit une correction de myopie, la face S1 est plus convexe dans les régions 22 que dans les régions 21. Inversement, la face S1 est moins convexe dans les régions 22 que dans les régions 21 lorsque le verre réalise une correction d'hypermétropie, les régions 21 et 22 étant encore situées sur la face S1 de la lentille.

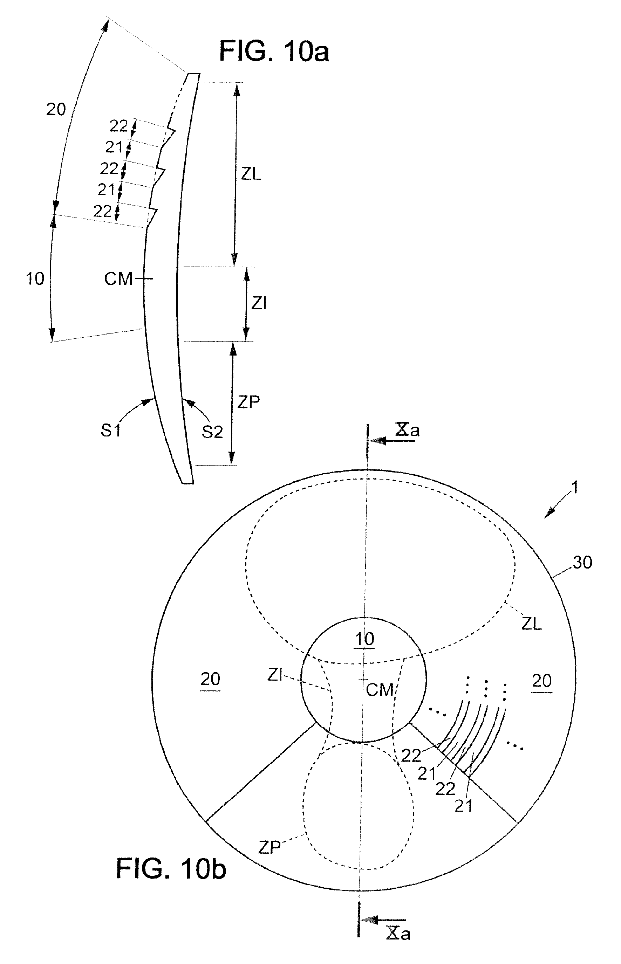

Pour l'invention, la face du verre autre que celle qui détermine la zone centrale 10 et les régions 21 et 22 forme une surface continue à variation progressive de courbure. Cette surface continue à variation progressive de courbure peut être usinée. Conformément à la figure 10a, la face S1 du verre est encore formée de façon à déterminer la zone centrale 10, la zone périphérique 20 et les régions 21 et 22. La face S2 présente une forme complexe, dont la courbure varie entre une zone de vision de loin du verre, notée ZL, et une zone de vision de près, notée ZP. La zone périphérique 20 exclut la zone de vision de près ZP. La zone 20 est limitée à un secteur angulaire supérieur du verre, qui est situé au dessus de et de chaque côté de la zone centrale 10. La figure 10b montre une telle configuration du verre. ZI désigne une zone intermédiaire entre les zones ZL et ZP, dans laquelle la courbure de la face S2 varie. En plus des autres avantages de l'invention, une telle lentille présente ceux d'une lentille à addition progressive de puissance optique.

Il est entendu que l'invention peut être mise en oeuvre en modifiant les valeurs numériques qui ont été données dans la description détaillée ci-dessus, ainsi que les variations qui sont représentées par les diagrammes des figures annexées. De même, la zone centrale, la zone périphérique, les premières et les secondes régions peuvent avoir des formes différentes de celles qui ont été décrites.

En outre, il est entendu que la zone centrale, la zone périphérique, les premières et les secondes régions peuvent être définies par une surface intermédiaire de la lentille. Pour cela, la lentille peut être constituée de deux éléments transparents qui sont constitués de matériaux respectifs ayant des valeurs différentes d'un indice de réfraction lumineuse. Ces deux éléments de lentille sont accolés selon la surface intermédiaire, avec des formes complémentaires.

## Revendications

1. Procédé de réalisation d'un verre de lunettes ophtalmiques (1) destiné à un porteur, comprenant les étapes suivantes :
/1/ obtenir une première correction ophtalmique pour la vision fovéale du porteur, et une seconde correction ophtalmique pour au moins une valeur d'excentricité appartenant à la vision périphérique du porteur, lesdites première et seconde corrections étant différentes ;
/2/ déterminer une zone centrale (10) et une zone périphérique (20) du verre, la zone périphérique étant située entre la zone centrale et une partie au moins d'un bord périphérique (30, 31) dudit verre ;
/3/ diviser la zone périphérique (20) en une pluralité de premières (21) et secondes (22) régions contiguës et alternées avec un pas inférieur ou égal à 2 mm ;
/4/ déterminer des premiers paramètres du verre dans la zone centrale (10) et dans les premières régions (21), correspondant à la première correction ophtalmique, et déterminer des seconds paramètres dudit verre dans les secondes régions (22), en fonction de la seconde correction ophtalmique ; et
/5/ réaliser le verre conformément aux dits premiers et seconds paramètres,
suivant lequel la zone centrale (10) du verre, dans laquelle les paramètres dudit verre correspondent à la première correction ophtalmique, contient un disque de rayon 2 mm,
et suivant lequel les secondes régions (22) ont chacune au moins une dimension comprise entre 15 µm et 1000 µm,
le verre comprenant deux faces opposées et séparées par un milieu réfringent, une première (S1) des deux faces déterminant la zone centrale (10) et les premières (21) et secondes (22) régions, et une seconde (S2) des deux faces ayant une surface continue à variation progressive de courbure, ladite courbure variant entre une zone de vision de loin (ZL) du verre et une zone de vision de près (ZP) dudit verre,
la zone périphérique (20) étant limitée à un secteur angulaire supérieur du verre, ledit secteur angulaire étant situé au dessus de et de chaque côté de la zone centrale (10), et la zone périphérique excluant la zone de vision de près.

2. Procédé selon la revendication 1, suivant lequel la zone centrale (10), les premières (21) et les secondes (22) régions sont déterminées par des variations d'au moins un paramètre d'une même surface (S1, S2) du verre ophtalmique.

3. Procédé selon la revendication 1 ou 2, suivant lequel l'étape /2/ comprend les sous-étapes suivantes :
/2-1/ caractériser une amplitude d'un mouvement de tête du porteur (100), effectué lorsque ledit porteur regarde successivement des objets situés dans des directions différentes ; et
/2-2/ déterminer une taille de la zone centrale (10) du verre de sorte que ladite taille de la zone centrale décroisse en fonction de l'amplitude du mouvement de tête caractérisée pour le porteur.

4. Procédé selon l'une quelconque des revendications précédentes, suivant lequel une proportion entre les premières (21) et les secondes (22) régions dans la zone périphérique (20) du verre est déterminée à l'étape /3/ en fonction d'une amplitude d'un mouvement de tête effectué par le porteur (100) lorsque ledit porteur regarde successivement des objets situés dans des directions différentes, de sorte qu'un quotient d'une somme de surfaces de secondes régions (22) par une surface d'une partie correspondante de la zone périphérique (20) croisse en fonction de l'amplitude du mouvement de tête effectué par le porteur.

5. Procédé selon l'une quelconque des revendications précédentes, suivant lequel les premières (21) et secondes (22) régions sont des bandes disposées dans un secteur angulaire autour de la zone centrale (10) du verre, et alternées le long de directions radiales partant de ladite zone centrale vers le bord périphérique (30, 31) du verre.

6. Procédé selon les revendications 4 et 5, suivant lequel les bandes des secondes régions (22) ont des largeurs respectives fixées selon les directions radiales dans la zone périphérique (20) du verre, et suivant lequel la proportion entre les premières (21) et secondes (22) régions dans ladite zone périphérique est déterminée en sélectionnant au moins une valeur du pas d'alternance des bandes des premières et secondes régions.

7. Procédé selon les revendications 4 et 5, suivant lequel les bandes des premières (21) et secondes (22) régions sont alternées avec une valeur fixée du pas selon les directions radiales dans la zone périphérique (20) du verre, et suivant lequel la proportion entre les premières (21) et secondes (22) régions dans ladite zone périphérique est déterminée en sélectionnant au moins une valeur d'un rapport cyclique des bandes des premières et secondes régions.

8. Procédé selon l'une quelconque des revendications précédentes, suivant lequel les secondes régions (22) ont chacune au moins une dimension comprise entre 25 µm et 50 µm.

9. Procédé selon l'une quelconque des revendications 1 à 8, suivant lequel le verre produit une première puissance optique dans la zone centrale (10) et les premières régions (21) correspondant à une correction d'hypermétropie pour la vision fovéale du porteur, et produit une seconde puissance optique à l'intérieur de l'une quelconque des secondes régions (22) pour la vision périphérique dudit porteur, ladite seconde puissance optique étant inférieure en valeur algébrique à ladite première puissance optique,
et suivant lequel les seconds paramètres du verre sont adaptés pour que la seconde puissance optique soit constante ou décroissante en valeur algébrique, en fonction d'une distance radiale mesurée sur ledit verre à partir d'un point de référence (CM) de la zone centrale (10), d'une seconde région (22) à une autre et éventuellement à l'intérieur de chaque seconde région.

10. Procédé selon l'une quelconque des revendications 1 à 8, suivant lequel le verre produit une première puissance optique dans la zone centrale (10) et les premières régions (21) correspondant à une correction de myopie pour la vision fovéale du porteur, et produit une seconde puissance optique à l'intérieur de l'une quelconque des secondes régions (22) pour la vision périphérique du porteur, ladite seconde puissance optique étant supérieure en valeur algébrique à ladite première puissance optique,
et suivant lequel les seconds paramètres du verre sont adaptés pour que la seconde puissance optique soit constante ou croissante en valeur algébrique, en fonction d'une distance radiale mesurée sur ledit verre à partir d'un point de référence (CM) de la zone centrale (10), d'une seconde région (22) à une autre et éventuellement à l'intérieur de chaque seconde région.

11. Procédé selon l'une quelconque des revendications précédentes, suivant lequel l'étape /5/ comprend les sous-étapes suivantes :
/5-1/ sélectionner un verre semi-fini (1), dont l'une parmi une face antérieure (S1) et une face postérieure (S2) dudit verre semi-fini détermine une zone centrale (10), une zone périphérique (20) située entre ladite zone centrale et une partie au moins d'un bord périphérique (30, 31) dudit verre semi-fini, et des premières (21) et secondes (22) régions contiguës et alternées avec un pas inférieur ou égal à 2 mm, et formant une partition de la zone périphérique du verre semi-fini, ledit verre semi-fini fixant un écart entre des corrections ophtalmiques produites respectivement dans la zone centrale (10) et les premières régions (21) d'une part, et dans l'une au moins des secondes régions (22) d'autre part, pour un verre fini réalisé à partir dudit verre semi-fini ; et
/5-2/ usiner l'autre de la face antérieure (S1) et de la face postérieure (S2) du verre semi-fini, de sorte que le verre produise la première correction ophtalmique dans la zone centrale (10) et dans les premières régions (21).

12. Procédé selon la revendication 11 ensemble la revendication 3 ou 4, suivant lequel le verre semi-fini (1) est sélectionné à la sous-étape /5-1/ en fonction de la taille de la zone centrale (10) ou/et de la proportion entre les premières (21) et les secondes (22) régions déterminée pour le porteur (100).

13. Procédé selon la revendication 11 ou 12, suivant lequel la face (S2) du verre autre que celle (S1) qui détermine ladite zone centrale (10) et les dites premières (21) et secondes (22) régions est usinée à l'étape /5-2/ de façon à former sur ladite autre face une surface continue à variation progressive de courbure.

## Patentansprüche

1. Verfahren zur Herstellung eines für einen Träger bestimmten Glases einer ophthalmischen Brille (1), das die folgenden Schritte enthält:
/1/Erhalt einer ersten ophthalmischen Korrektur für das foveale Sehen des Trägers und einer zweiten ophthalmischen Korrektur für mindestens einen zum peripheren Sehen des Trägers gehörenden Exzentrizitätswert, wobei die erste und die zweite Korrektur unterschiedlich sind;
/2/Bestimmen einer zentralen Zone (10) und einer peripheren Zone (20) des Glases, wobei die periphere Zone sich zwischen der zentralen Zone und mindestens einem Teil eines peripheren Rands (30, 31) des Glases befindet;
/3/Aufteilen der peripheren Zone (20) in eine Vielzahl erster (21) und zweiter (22) aneinander grenzender und mit einer Teilung von weniger als oder gleich 2 mm alternierender
Bereiche;
/4/Bestimmen erster Parameter des Glases in der zentralen Zone (10) und in den ersten Bereichen (21), die der ersten ophthalmischen Korrektur entsprechen, und Bestimmen zweiter Parameter des Glases in den zweiten Bereichen (22) abhängig von der zweiten ophthalmischen Korrektur; und
/5/Herstellen des Glases gemäß den ersten und zweiten Parametern,
gemäß dem die zentrale Zone (10) des Glases, in der die Parameter des Glases der ersten ophthalmischen Korrektur entsprechen, eine Scheibe mit einem Radius von 2 mm enthält,
und gemäß dem die zweiten Bereiche (22) je mindestens eine Abmessung zwischen 15 µm und 1000 µm haben,
wobei das Glas zwei gegenüberliegende und durch ein lichtbrechendes Medium getrennte Seiten enthält, wobei eine erste (S1) der zwei Seiten die zentrale Zone (10) und die ersten (21) und zweiten (22) Bereiche bestimmt, und eine zweite (S2) der zwei Seiten eine durchgehende Fläche mit progressiver Krümmungsänderung hat, wobei die Krümmung sich zwischen einer Weitsichtzone (ZL) des Glases und einer Nahsichtzone (ZP) des Glases ändert,
wobei die periphere Zone (20) auf einen oberen Winkelsektor des Glases begrenzt ist, wobei der Winkelsektor sich oberhalb von und zu beiden Seiten der zentralen Zone (10) befindet, und die periphere Zone die Nahsichtzone ausschließt.

2. Verfahren nach Anspruch 1, gemäß dem die zentrale Zone (10), die ersten (21) und die zweiten (22) Bereiche durch Änderungen mindestens eines Parameters der gleichen Fläche (S1, S2) des ophthalmischen Glases bestimmt werden.

3. Verfahren nach Anspruch 1 oder 2, gemäß dem der Schritt /2/ die folgenden Teilschritte enthält:
/2-1/Kennzeichnen einer Amplitude einer Kopfbewegung des Trägers (100), die ausgeführt wird, wenn der Träger nacheinander Gegenstände betrachtet, die sich in unterschiedlichen Richtungen befinden; und
/2-2/Bestimmen einer Größe der zentralen Zone (10) des Glases derart, dass die Größe der zentralen Zone abhängig von der gekennzeichneten Amplitude der Kopfbewegung für den Träger abnimmt.

4. Verfahren nach einem der vorhergehenden Ansprüche, gemäß dem eine Proportion zwischen den ersten (21) und den zweiten (22) Bereichen in der peripheren Zone (20) des Glases im Schritt /3/ abhängig von einer Amplitude einer Kopfbewegung bestimmt wird, die vom Träger (100) ausgeführt wird, wenn der Träger nacheinander Gegenstände betrachtet, die sich in verschiedenen Richtungen befinden, derart dass ein Quotient einer Summe von Flächen von zweiten Bereichen (22) durch eine Fläche eines entsprechenden Teils der peripheren Zone (20) abhängig von der Amplitude der vom Träger ausgeführten Kopfbewegung zunimmt.

5. Verfahren nach einem der vorhergehenden Ansprüche, gemäß dem die ersten (21) und zweiten (22) Bereiche Streifen sind, die in einem Winkelsektor um die zentrale Zone (10) des Glases herum angeordnet sind und entlang radialer Richtungen ausgehend von der zentralen Zone zum peripheren Rand (30, 31) des Glases alternieren.

6. Verfahren nach den Ansprüchen 4 und 5, gemäß dem die Streifen der zweiten Bereiche (22) jeweilige Breiten haben, die gemäß den radialen Richtungen in der peripheren Zone (20) des Glases festgelegt werden, und gemäß dem die Proportion zwischen den ersten (21) und zweiten (22) Bereichen in der peripheren Zone bestimmt wird, indem mindestens ein Wert der Alternierungsteilung der Streifen der ersten und zweiten Bereiche ausgewählt wird.

7. Verfahren nach den Ansprüchen 4 und 5, gemäß dem die Streifen der ersten (21) und zweiten (22) Bereiche mit einem festgelegten Wert der Teilung gemäß den radialen Richtungen in der peripheren Zone (20) des Glases alternieren, und gemäß dem die Proportion zwischen den ersten (21) und zweiten (22) Bereichen in der peripheren Zone bestimmt wird, indem mindestens ein Wert eines zyklischen Verhältnisses der Streifen der ersten und zweiten Bereiche ausgewählt wird.

8. Verfahren nach einem der vorhergehenden Ansprüche, gemäß dem die zweiten Bereiche (22) je mindestens eine Abmessung zwischen 25 µm und 50 µm haben.

9. Verfahren nach einem der Ansprüche 1 bis 8, gemäß dem das Glas eine erste optische Leistung in der zentralen Zone (10) und den ersten Bereichen (21) entsprechend einer Weitsichtigkeitskorrektur für das foveale Sehen des Trägers erzeugt, und eine zweite optische Leistung innerhalb eines beliebigen der zweiten Bereiche (22) für das periphere Sehen des Trägers erzeugt, wobei die zweite optische Leistung im algebraischen Wert niedriger als die erste optische Leistung ist, und gemäß dem die zweiten Parameter des Glases so angepasst sind, dass die zweite optische Leistung im algebraischen Wert konstant oder abnehmend ist, abhängig von einem am Glas ausgehend von einem Bezugspunkt (CM) der zentralen Zone (10), von einem zweiten Bereich (22) zu einem anderen und ggf. innerhalb jedes zweiten Bereichs gemessenen radialen Abstand.

10. Verfahren nach einem der Ansprüche 1 bis 8, gemäß dem das Glas eine erste optische Leistung in der zentralen Zone (10) und den ersten Bereichen (21) entsprechend einer Kurzsichtigkeitskorrektur für das foveale Sehen des Trägers erzeugt, und eine zweite optische Leistung innerhalb eines beliebigen der zweiten Bereiche (22) für das periphere Sehen des Trägers erzeugt, wobei die zweite optische Leistung im algebraischen Wert höher als die erste optische Leistung ist, und gemäß dem die zweiten Parameter des Glases so angepasst sind, dass die zweite optische Leistung im algebraischen Wert konstant oder zunehmend ist, abhängig von einem am Glas ausgehend von einem Bezugspunkt (CM) der zentralen Zone (10), von einem zweiten Bereich (22) zu einem anderen und ggf. innerhalb jedes zweiten Bereichs gemessenen radialen Abstand.

11. Verfahren nach einem der vorhergehenden Ansprüche, gemäß dem der Schritt /5/ die folgenden Teilschritte enthält:
/5-1/Auswahl eines Halbfertigglases (1), wobei eine Seite, die Vorderseite (S1) oder die Rückseite (S2), des Halbfertigglases eine zentrale Zone (10), eine periphere Zone (20), die sich zwischen der zentralen Zone und mindestens einem Teil eines peripheren Rands (30, 31) des Halbfertigglases befindet, und erste (21) und zweite (22) Bereiche bestimmt, die aneinander grenzen und mit einer Teilung von weniger als oder gleich 2 mm alternieren, und eine Aufteilung der peripheren Zone des Halbfertigglases bildet, wobei das Halbfertigglas einen Zwischenraum zwischen ophthalmischen Korrekturen festlegt, die in der zentralen Zone (10) und den ersten Bereichen (21) einerseits bzw. in mindestens einem der zweiten Bereiche (22) andererseits für ein Fertigglas erzeugt werden, das ausgehend von dem Halbfertigglas hergestellt wird; und
/5-2/maschinelle Bearbeitung der anderen Seite, der Vorderseite (S1) oder der Rückseite (S2), des Halbfertigglases derart, dass das Glas die erste ophthalmische Korrektur in der zentralen Zone (10) und in den ersten Bereichen (21) erzeugt.

12. Verfahren nach Anspruch 11 zusammen mit Anspruch 3 oder 4, gemäß dem das Halbfertigglas (1) im Teilschritt /5-1/ abhängig von der Größe der zentralen Zone (10) und/oder von der Proportion zwischen den ersten (21) und den zweiten (22) Bereichen ausgewählt wird, die für den Träger (100) bestimmt wird.

13. Verfahren nach Anspruch 11 oder 12, gemäß dem die Seite (S2) des Glases anders als diejenige (S1), die die zentrale Zone (10) und die ersten (21) und zweiten (22) Bereiche bestimmt, im Schritt /5-2/ maschinell so bearbeitet wird, dass auf der anderen Seite eine durchgehende Fläche mit progressiver Krümmungsänderung gebildet wird.

## Claims

1. Method of producing an ophthalmic spectacle eyeglass (1) intended for a wearer, comprising the following steps:
/1/a first ophthalmic correction for the wearer's foveal vision and a second ophthalmic correction for at least one eccentricity value belonging to the wearer's peripheral vision are obtained, said first and second corrections being different;
/2/ a central zone (10) and a peripheral zone (20) of the eyeglass are determined, the peripheral zone being located between the central zone and at least one portion of a peripheral edge (30, 31) of said eyeglass;
/3/ the peripheral zone (20) is divided into a plurality of first (21) and second (22) regions that are contiguous and alternate with a pitch of 2 mm or less;
/4/ first parameters of the eyeglass in the central zone (10) and in the first regions (21), corresponding to the first ophthalmic correction, are determined and second parameters of said eyeglass in the second regions (22) are determined according to the second ophthalmic correction; and
/5/ the eyeglass is produced in accordance with said first and second parameters,
whereby the central zone (10) of the eyeglass, in which the parameters of said eyeglass correspond to the first ophthalmic correction, contains a disc of 2 mm radius,
and whereby the second regions (22) each have at least one dimension lying between 15 µm and 1000 µm,
the eyeglass comprising two opposed surfaces separated by a refringent medium, a first surface (S1) of the two surfaces determining the central zone (10) and the first (21) and second (22) regions, and a second surface (S2) of the two surfaces having a continuous area with a progressive variation in curvature, said curvature varing between a far vision zone (Z_{F}) of the eyeglass and a near vision zone (Z_{N}) of said eyeglass,
the peripheral zone (20) being limited to an upper angular sector of the eyeglass, said angular sector lying above and on each side of the central zone (10), and the peripheral zone excluding the near vision zone.

2. Method according to Claim 1, whereby the central zone (10) and the first (21) and second (22) regions are determined by variations in at least one parameter of one and the same surface (S1, S2) of the ophthalmic eyeglass.

3. Method according to Claim 1 or 2, whereby step /2/ comprises the following substeps:
/2-1/ an amplitude of head movement by the wearer (100), performed when said wearer looks in succession at objects located in different directions, is characterized; and
/2-2/ a size of the central zone (10) of the eyeglass is determined so that said size of the central zone decreases as a function of the head movement amplitude characterized for the wearer.

4. Method according to any one of the preceding claims, whereby a proportion between the first (21) and second (22) regions in the peripheral zone (20) of the eyeglass is determined in step /3/ as a function of an amplitude of head movement performed by the wearer (100) when said wearer looks in succession at objects located in different directions, so that a quotient of the sum of the areas of second regions (22) divided by the area of a corresponding portion of the peripheral zone (20) increases as a function of the amplitude of head movement performed by the wearer.

5. Method according to any one of the preceding claims, whereby the first (21) and second (22) regions are bands lying in an angular sector around the central zone (10) of the eyeglass and alternating along radial directions going from said central zone to the peripheral edge (30, 31) of the eyeglass.

6. Method according to Claims 4 and 5, whereby the bands of the second regions (22) have respective widths fixed along the radial directions in the peripheral zone (20) of the eyeglass and whereby the proportion between the first (21) and the second (22) regions in the said peripheral zone is determined by selecting at least one value of the alternation pitch of the bands of the first and second regions.

7. Method according to Claims 4 and 5, whereby the bands of the first (21) and second (22) regions alternate with a fixed value of the pitch along the radial directions in the peripheral zone (20) of the eyeglass and whereby the proportion between the first (21) and second (22) regions in said peripheral zone is determined by selecting at least one value of a duty cycle of the bands of the first and second regions.

8. Method according to any one of the preceding claims, whereby the second regions (22) each have at least one dimension lying between 25 µm and 50 µm.

9. Method according to any one of Claims 1 to 8, whereby the eyeglass produces a first optical power in the central zone (10) and the first regions (21) corresponding to a hypermetropia correction for foveal vision of the wearer and produces a second optical power within any one of the second regions (22) for peripheral vision of said wearer, said second optical power being lower in algebraic value than said first optical power, and whereby the second parameters of the eyeglass are adapted in order for the second optical power to be constant or decreasing in algebraic value as a function of a radial distance, measured on said eyeglass from a reference point (FC) of the central zone (10), from one second region (22) to another and optionally within each second region.

10. Method according to any one of Claims 1 to 8, whereby the eyeglass produces a first optical power in the central zone (10) and the first regions (21) corresponding to a myopia correction for foveal vision of the wearer and produces a second optical power within any one of the second regions (22) for peripheral vision of the wearer, said second optical power being higher in algebraic value than said first optical power, and whereby the second parameters of the eyeglass are adapted so that the second optical power is constant or increasing in algebraic value as a function of a radial distance, measured on said eyeglass from a reference point (FC) of the central zone (10), from one second region (22) to another and optionally within each second region.

11. Method according to any one of the preceding claims, whereby step /5/ comprises the following substeps:
/5-1/ a semi-finished eyeglass (1) is selected, one surface of which, either the anterior surface (S1) or the posterior surface (S2) of said semi-finished eyeglass, determines a central zone (10), a peripheral zone (20) located between said central zone and at least one portion of a peripheral edge (30, 31) of said semi-finished eyeglass, and first (21) and second (22) regions that are contiguous and alternate with a pitch of 2 mm or less, and forming a partition of the peripheral zone of the semi-finished eyeglass fixing a difference between ophthalmic corrections produced respectively in the central zone (10) and the first regions (21) on the one hand and in at least one of the second regions (22) on the other, for a finished eyeglass produced from said semi-finished eyeglass; and
/5-2/ the other surface of the semi-finished eyeglass, either the posterior surface (S2) or the anterior surface (S1), is machined so that the eyeglass produces the first ophthalmic correction in the central zone (10) and in the first regions (21).

12. Method according to Claim 11 together with Claim 3 or 4, whereby the semi-finished eyeglass (1) is selected at substep /5-1/ as a function of the size of the central zone (10) and/or the proportion between the first (21) and the second (22) regions which is determined for the wearer (100).

13. Method according to Claim 11 or 12, whereby the surface (S2) of the eyeglass other than that (S1) which determines said central zone (10) and said first (21) and second (22) regions is machined in step /5-2/ so as to form on said other surface a continuous area having a progressive variation in curvature.
